# FASCICULE DE BREVET EUROPEEN

(11) **EP 0 672 547 B1**
(45) Date de publication et mention de la délivrance du brevet: **25.11.1998**
(21) Numéro de dépôt: 95103029.5
(22) Date de dépôt: 03.03.1995
(51) Int. Cl.: B60C 15/04, B60C 15/00

(54) **Enveloppe de pneumatique dépourvue de tringle**
Luftreifen ohne Wulstkern
Tire without bead core

(30) Priorité: 16.03.1994 FR 9403166
(43) Date de publication de la demande: 20.09.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Ahouanto, Michel, F-63530 Enval (FR)
(74) Mandataire: Devaux, Edmond-Yves

(56) Documents cités:
- EP-A- 0 582 196
- FR-A- 1 256 432
- FR-A- 1 404 543
- FR-A- 2 132 509
- FR-A- 2 141 834
- FR-A- 2 204 511

## Description

L'invention concerne les enveloppes de pneumatiques et les procédés pour les fabriquer.

Le brevet FR-A-1 169 474 décrit une enveloppe de pneumatique sans tringle comportant, à l'endroit de l'accrochage avec la jante, de petites nappes de câbles ou de fils qui sont parallèles entre eux dans chaque nappe et très inclinés sur le parallèle d'accrochage, les diverses nappes étant croisées entre elles. Le but de ce brevet est de faciliter la fabrication de l'enveloppe grâce à l'absence de tringle, car on élimine ainsi la nécessité de fabriquer une tringle. Cependant la réalisation de cette enveloppe pose des problèmes car il est difficile de garantir un maintien satisfaisant de ses éléments, lors des étapes de confection, de conformation et de cuisson, et l'enveloppe terminée ne permet pas d'avoir une endurance satisfaisante en roulage.

L'objet de l'invention est de proposer une enveloppe de pneumatique dépourvue de tringle permettant une endurance satisfaisante lors du roulage.

Un autre objet de l'invention est de proposer un procédé pour fabriquer cette enveloppe, ce procédé présentant l'intérêt d'être simple et économique, tout en permettant un positionnement et un maintien précis des éléments de l'enveloppe lors des étapes de la fabrication.

L'enveloppe de pneumatique radiale conforme à l'invention comportant un sommet, deux bourrelets et au moins une nappe carcasse radiale s'étendant d'un bourrelet à l'autre est caractérisée en ce que chaque bourrelet présente les points suivants :
a) il est dépourvu de tringle et il comporte un élément annulaire dont la résistance à la rupture en traction dans le sens longitudinal est notablement inférieure à celle qui serait nécessaire pour une tringle dans une enveloppe connue de même dimension, l'axe de cet élément annulaire étant l'axe de révolution de l'enveloppe;
b) au moins deux nappes adjacentes dites "nappes de renfort" sont disposées au contact de l'élément annulaire, ou à proximité de cet élément annulaire ; ces nappes de renfort comportant chacune des fils de renfort parallèles entre eux, ces fils étant croisés d'une nappe à l'autre ; dans chaque nappe de renfort l'angle α est l'angle aigu formé, en un point quelconque d'un fil, par la direction de ce fil et la tangente à un cercle ayant pour axe l'axe de révolution de l'enveloppe et passant par ce point du fil, cet angle α vérifiant la relation 0 < α ≤ 10°, la mesure étant effectuée dans une zone où les nappes de renfort sont pratiquement parallèles entre elles ;
c) l'ensemble des nappes de renfort a une résistance à la rupture en traction, mesurée dans le sens longitudinal, au moins égale à celle qui serait nécessaire pour une tringle dans une enveloppe connue de même dimension ;
d) la nappe carcasse s'enroule autour de l'élément annulaire ;
e) les nappes de renfort ont leurs extrémités supérieures disposées dans le bourrelet, ces extrémités étant disposées à des hauteurs différentes.

Le procédé conforme à l'invention, pour fabriquer une enveloppe de pneumatique dépourvue de tringle, est caractérisé par les points suivants :
a) on dispose sur un tambour de confection :
   - un élément annulaire dont la résistance à la rupture en traction dans le sens longitudinal est notablement inférieure à celle qui serait nécessaire pour une tringle, dans une enveloppe connue de même dimension, l'axe de cet élément étant l'axe de rotation du tambour ;
   - au moins deux nappes adjacentes, dites "nappes de renfort", au contact de l'élément annulaire ou à proximité de cet élément annulaire ; ces nappes de renfort comportant chacune des fils de renfort parallèles entre eux, dans chaque nappe et croisés d'une nappe à l'autre ;
   - au moins une nappe carcasse comportant des fils de renfort disposés sensiblement selon les génératrices du cylindre de confection ;
b) on conforme l'enveloppe, de telle sorte que, après conformation, dans chaque nappe de renfort l'angle α vérifie la relation 0 < α ≤ 10°, α étant l'angle aigu formé, en un point quelconque d'un fil de la nappe, par la direction de ce fil et la tangente à un cercle ayant pour axe l'axe de révolution de l'enveloppe et passant par ce point du fil, la mesure étant effectuée dans une zone où les nappes de renfort sont pratiquement parallèles entre elles ;
c) on cuit l'enveloppe.

L'invention sera aisément comprise à l'aide des exemples qui suivent, en faisant référence aux figures, toutes schématiques, dont la signification est la suivante :
- la figure 1 représente en coupe radiale une enveloppe de pneumatique conforme à l'invention, comportant deux bourrelets ;
- la figure 2 représente, plus en détail, en coupe radiale, un bourrelet de l'enveloppe représentée à la figure 1 ;
- la figure 3 représente, vue de profil, une partie du bourrelet représenté à la figure 2 ;
- la figure 4 représente en coupe radiale, un bourrelet d'une autre enveloppe conforme à l'invention.

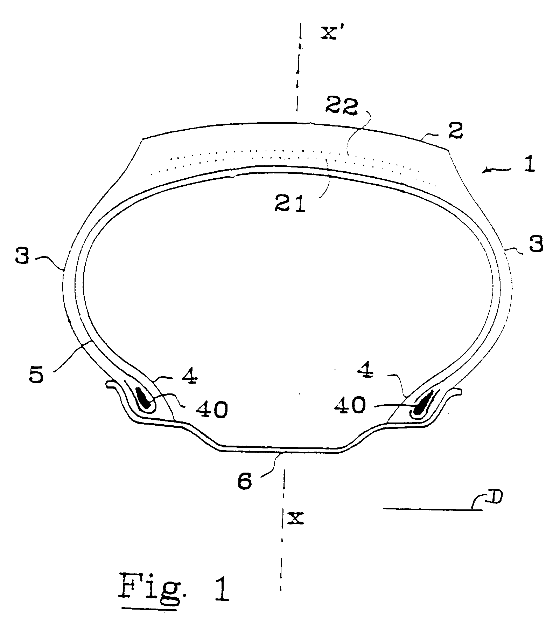

La figure 1 représente une enveloppe 1 de pneumatique conforme à l'invention. La figure 1 est une coupe radiale, c'est-à-dire une coupe effectuée selon un plan passant par l'axe de rotation de l'enveloppe 1, cet axe, non représenté sur la figure 1, étant parallèle à la droite D. Cette enveloppe 1 comporte un sommet 2, renforcé de façon connue par deux nappes de sommet 21, 22, deux flancs 3, et deux bourrelets 4. Chaque bourrelet 4 comporte un ensemble renforçant 40 qui sera décrit plus en détail ultérieurement.

Une nappe carcasse radiale 5 s'étend d'un bourrelet 4 à l'autre, en traversant le sommet 2 et les flancs 3.

L'enveloppe 1 est montée sur la jante 6, le plan équatorial de l'enveloppe étant schématisé par la ligne xx', ce plan passant par le milieu du sommet 2 et étant perpendiculaire à l'axe de rotation de l'enveloppe.

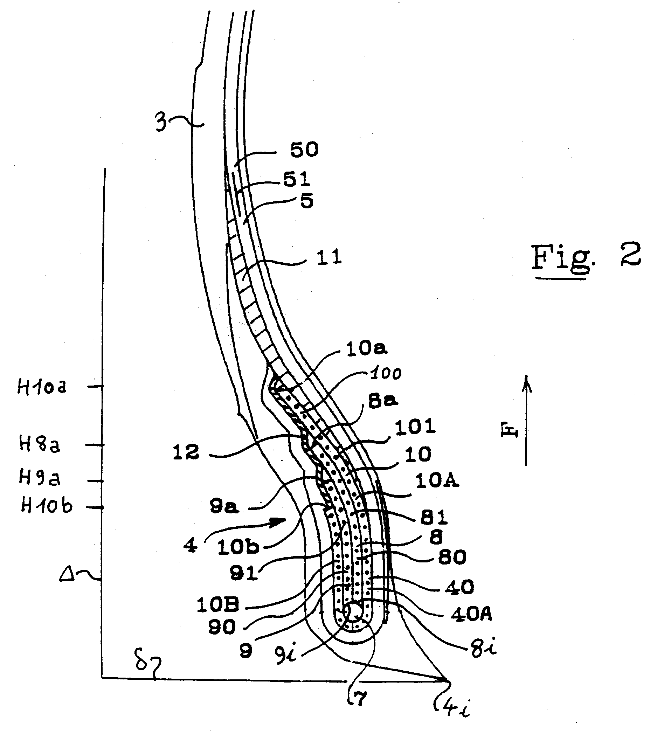

La figure 2 représente plus en détail un bourrelet 4 de l'enveloppe 1. Ce bourrelet 4 comporte un élément annulaire 7 constitué par exemple par un fil circulaire, l'axe de ce cercle étant l'axe de révolution de l'enveloppe.

Deux nappes de renfort adjacentes 8 et 9 ont leurs extrémités inférieures respectives 8i, 9i au contact de l'élément annulaire 7 et elles s'étendent au-dessus de cet élément 7, c'est-à-dire qu'elles sont plus proches du sommet 2 que l'élément 7. Ces nappes 8, 9 comportent chacune une gomme de caoutchouc 80, 90, dans laquelle sont disposés des fils de renfort 81, 91. Une nappe de renfort 10 entoure l'élément 7 et les nappes 8, 9, en formant ainsi deux nappes élémentaires 10A, 10B appliquées contre les nappes 8, 9 qui sont ainsi disposées en sandwich entre les nappes élémentaires 10A, 10B, les nappes en contact 10A, 8, 9, 10B, dénommées par la suite "nappes de renfort", étant alors pratiquement parallèles entre elles. La nappe 10 comporte une gomme de caoutchouc 100 dans laquelle sont disposés des fils de renfort 101. L'ensemble constitué par l'élément 7 et les nappes 10A, 8, 9, 10B est référencé 40, et l'ensemble de ces nappes, sans l'élément 7, est référencé 40A.

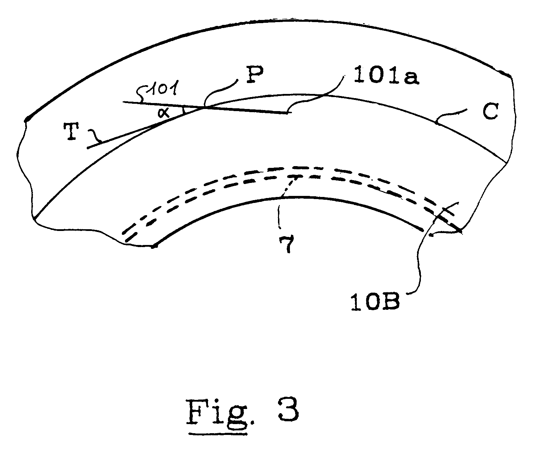

Dans une nappe de renfort quelconque donnée 8, 9, 10A, 10B, les fils de cette nappe sont parallèles entre eux et forment un angle aigu α, déterminé en un point quelconque du fil entre la direction de ce fil et la tangente à un cercle ayant pour axe l'axe de révolution de l'enveloppe et passant par ce point. La figure 3 représente une portion de la nappe élémentaire 10B vue de profil, selon une direction parallèle à l'axe de révolution de l'enveloppe 1. On voit sur cette figure une portion pratiquement rectiligne de fil 101 représentée par le segment de droite 101a et une partie d'un cercle C passant par un point P de cette portion de fil, le cercle C ayant pour axe l'axe de révolution de l'enveloppe 1, la tangente au cercle C en P étant référencée T. L'angle α est donc l'angle aigu déterminé par T et 101a, la mesure étant effectuée à l'endroit où les nappes 10A, 8, 9, 10B sont pratiquement parallèles entre elles.

Pour chaque nappe 10A, 8, 9, 10B l'angle α varie en fonction de la position du point P mais il est toujours supérieur à 0° et au plus égal à 10°.

Les fils d'une nappe de renfort sont croisés avec les fils de la ou des nappes de renfort adjacentes, c'est-à-dire que les fils de deux nappes adjacentes ne sont pas parallèles entre eux. C'est ainsi par exemple que les fils 81 de la nappe 8 sont croisés avec les fils 101 de la nappe adjacente 10A et avec les fils 91 de la nappe adjacente 9, les fils 101 de la nappe 10A étant croisés avec les fils 101 de la nappe 10B puisque ces nappes 10A, 10B sont constituées par le retournement de la même nappe 10 autour de l'élément 7.

Le terme de fil doit être pris dans un sens très général pour l'élément 7 et les fils 81,91, 101, un tel fil pouvant être constitué par un fil unique monofilamentaire ou multifilamentaire ou par un ensemble de tels fils tordus entre eux formant notamment des câbles ou des retors. La matière constituant ces fils peut être variable, elle peut être par exemple métallique, notamment en acier, elle peut être en polymère organique, par exemple en matière cellulosique, en polyester ou en polyamide non aromatiques ou aromatiques, notamment des fils aramides, elle peut être aussi minérale, par exemple en verte, en carbone, chaque fil pouvant comporter plusieurs de telles matières.

L'élément annulaire 7 a une résistance à la rupture en traction, mesurée dans le sens longitudinal, qui est notablement inférieure à celle qui serait nécessaire pour une tringle dans une enveloppe connue de même dimension, et l'ensemble 40A des nappes de renfort a une résistance à la rupture en traction, mesurée dans le sens longitudinal, au moins égale à celle qui serait nécessaire pour une tringle dans une enveloppe connue de même dimension. Par direction longitudinale on entend celle d'un cercle ayant pour axe l'axe de révolution de l'enveloppe, et passant par la tringle dans le cas de l'enveloppe connue, ou par l'ensemble des nappes de renfort, dans le cas de l'enveloppe conforme à l'invention. La résistance mécanique de ces nappes de renfort est donc la contribution essentielle à la résistance mécanique de l'ensemble renforçant 40 constitué par l'élément 7 et les nappes 8, 9, 10, cet ensemble permettant ainsi de remplacer la tringle d'une enveloppe classique.

La nappe carcasse 5 s'enroule autour de l'ensemble 40 et donc autour de l'élément 7. Cette nappe carcasse 5 comporte, de façon connue, une gomme de caoutchouc 50 dans laquelle sont disposés des fils de renfort 51, le terme "fil" ayant la signification générale donnée plus haut. Pour la clarté du dessin seule une portion de fil 51 est représentée à la figure 2. Le module de la gomme 50 est de préférence notablement inférieur au module des gommes 80, 90, 100.

Entre la nappe carcasse 5 et l'ensemble 40A sont disposées deux gommes de caoutchouc 11, 12, dites gommes de découplage. La valeur de M10 des gommes 11, 12 est de préférence comprise entre celle de la gomme 50 d'une part et celle des gommes 80, 90, 100 d'autre part.

Dans ce qui suit, M10 représente, pour une gomme donnée, la contrainte de traction pour un allongement de 10 %, cette contrainte étant déterminée conformément à la norme AFNOR-NF-T46-002 de septembre 1988, dans les conditions normales de température et d'hygrométrie selon la norme AFNOR-NF-T40-101 de décembre 1979. Les valeurs de M10 des gommes 80, 90, 100 peuvent être identiques ou différentes et les valeurs de M10 des gommes 11, 12 peuvent aussi être identiques ou différentes.

Sur le plan de la figure 2, les extrémités opposées à l'élément 7 des nappes 8, 9 sont référencées 8a, 9a. De même les extrémités, non au contact de l'élément 7, des nappes élémentaires 10A, 10B sont notées respectivement 10a, 10b. Toutes les extrémités 8a, 9a, 10a, 10b, dites extrémités supérieures, sont disposées dans le bourrelet 4.

La gomme 11 est disposée à l'extérieur de l'ensemble 40, contre la partie supérieure de la nappe 10A et se prolonge au-dessus de l'ensemble 40 dans le flanc 3, et la gomme 12 est appliquée entre les extrémités 10a et 10b, en étant au contact des quatre nappes 10A, 8, 9, 10B

Toutes ces extrémités supérieures sont disposées à des hauteurs différentes sur le plan de la figure 2 : lorsqu'on se déplace en direction du sommet dans le sens de la flèche F verticale parallèle au plan équatorial supposé vertical, on trouve dans l'ordre à des hauteurs croissantes les extrémités 10b, 9a, 8a, 10a, c'est-à-dire que l'épaisseur, et donc la rigidité, de l'ensemble 40 diminue lorsqu'on se dirige vers le haut, dans le sens de la flèche F. Les hauteurs croissantes H10b, H9a, H8a, H10a, correspondant respectivement aux extrémités 10b, 9a, 8a, 10a, sont déterminées sur la droite verticale Δ, à partir de la droite δ horizontale passant par l'extrémité inférieure 4i du bourrelet 4.

L'enveloppe 1 peut être fabriquée de la façon suivante sur un tambour de confection.

On dispose la nappe carcasse 5, puis la gomme de découplage 11, ensuite la nappe 10. On dispose ensuite sur la nappe 10, l'élément 7, par exemple en enroulant une ou plusieurs spires d'un fil enrobé de gomme de caoutchouc formant cet élément. On applique ensuite sur la nappe 10, au contact de l'élément 7, les deux nappes superposées 8, 9 dont les extrémités 8a, 9a sont disposées en direction du milieu du tambour. On effectue alors un retroussage de la nappe carcasse 5, et de la nappe 10 autour de l'élément 7 et des nappes 8, 9. On termine ensuite la fabrication de l'enveloppe par confection, conformation et vulcanisation de façon classique. Les spires de l'élément 7 ont une bonne cohésion entre elles, et avec le reste de l'enveloppe, sans attache particulière, grâce au collant de la gomme qui enrobe le fil formant l'élément 7.

L'élément annulaire 7 a une résistance à la rupture en traction, mesurée dans le sens longitudinal, de préférence inférieure à 500 daN, et avantageusement inférieure à 300 daN, c'est-à-dire que cet élément a une résistance mécanique très inférieure à celle qui serait nécessaire pour une tringle, l'enveloppe 1 étant ainsi dépourvue de tringle classique. Cependant, cette résistance à la rupture en traction est choisie de façon à permettre les opérations de confection, de retroussage, de conformation et de vulcanisation, précédemment décrites, c'est-à-dire que l'élément 7 a un niveau de tenue mécanique très inférieur à celui d'une tringle classique, l'élément 7 ne jouant donc pas le rôle d'une tringle, mais d'un élément permettant de positionner les unes par rapport aux autres les nappes 10A, 8, 9, 10B.

L'ensemble 40A des nappes de renfort a une résistance à la rupture en traction, mesurée dans le sens longitudinal, supérieure à 800 daN et avantageusement supérieure à 1000 daN.

A titre d'exemple l'enveloppe 1 a les caractéristiques suivantes :
- Dimension 175/70-13.
- Nappes sommet 21, 22 : nappes connues comportant des câbles d'acier de renfort faisant un angle de 21° avec le plan équatorial, ces renforts étant croisés d'une nappe à l'autre.
- Nappe carcasse 5 : nappe classique ayant des fils 51 en polyester ; valeur de M10 de la gomme 50 : 0,3 MPa.
- Elément annulaire 7 : deux spires d'un fil constitué d'un retors aramide ; résistance à la rupture en traction du fil : 100 daN, la résistance globale à la traction, dans le sens longitudinal de l'élément 7 étant donc de 200 daN.
- Nappes 10A, 8, 9, 10B : nappes identiques avec des fils en aramide ;
   . résistance à la rupture en traction, mesurée pour chaque nappe dans le sens des fils de cette nappe : 5000 daN/dm de largeur de nappe, la résistance à la rupture en traction mesurée dans le sens longitudinal de l'ensemble 40A étant égale environ à 4500 daN ;
   . valeur de M10 des gommes 80, 90, 100 (identiques) : 2,4 MPa.
- Gommes 11, 12 de découplage (identiques) :
   . valeur de M10 : 0,6 MPa,
   . ces gommes 11,12 ont par exemple une perte hystérétique, mesurée à 60°C. inférieure à celle des gommes 80, 90, 100, 50.
- Poids de l'enveloppe : 6,3 kg.

On fait rouler cette enveloppe à une vitesse de 215 km/h jusqu'à la mort de l'enveloppe. Lorsque celle-ci se produit, on constate qu'elle est due à une déchéance du sommet 2, pas à l'ensemble 40.

On réalise d'autre part une enveloppe connue, de même dimension 175/70-13, identique à l'enveloppe de l'invention sauf que l'ensemble renforçant 40 est remplacé par une tringle classique en métal, dont la résistance à la rupture en traction, mesurée dans le sens longitudinal est de 2000 daN.

Le poids de cette enveloppe témoin est de 6,8 kg, c'est-à-dire que l'invention permet une diminution du poids supérieure à 7 %.

On fait rouler cette enveloppe témoin dans les mêmes conditions que l'enveloppe conforme à l'invention et on constate que les performances sont analogues à celles de l'enveloppe conforme à l'invention.

L'invention présente les avantages suivants :
- la réalisation de l'enveloppe est simple et économique car l'ensemble 40 est formé directement sur le tambour de confection, il n'y a pas de fabrication préalable de tringle ;
- la présence de l'élément 7 permet un positionnement précis et reproductible des nappes 10A, 8, 9, 10B sans autre élément de maintien ;
- d'autre part, la présence des gommes de découplage 11, 12 ainsi que l'étagement des extrémités supérieures des nappes dans les bourrelets permet les effets de cisaillement entre la nappe carcasse radiale et l'ensemble 40 rigide longitudinalement ainsi qu'une transition progressive entre la rigidité des bourrelets 4 et la souplesse des flancs 3 ;
- lorsqu'on utilise des matières non métalliques pour réaliser l'ensemble 40 on obtient une diminution de poids importante par rapport aux enveloppes classiques avec tringle métallique ;
- l'enveloppe dépourvue de tringle permet d'obtenir une endurance comparable à celle des enveloppes classiques avec tringles, malgré la simplicité de la fabrication.

Bien entendu, l'invention n'est pas limitée aux exemples de réalisation précédemment décrits.

C'est ainsi par exemple que l'ensemble 40 pourrait comporter seulement deux nappes de renfort, par exemple les nappes 8, 9 ou les nappes 10A, 10B.

D'autre part, les nappes 8, 9 pourraient être à proximité de l'élément 7, par exemple en étant séparées de cet élément par une gomme de caoutchouc d'épaisseur faible, par exemple inférieure à 5 mm, et les nappes 8, 9, 10 pourraient être différentes, par exemple avec des gommes de modules différents et on pourrait n'utiliser qu'une gomme de découplage.

Les nappes 8, 9 d'autre part peuvent être réalisées en pliant une nappe unique.

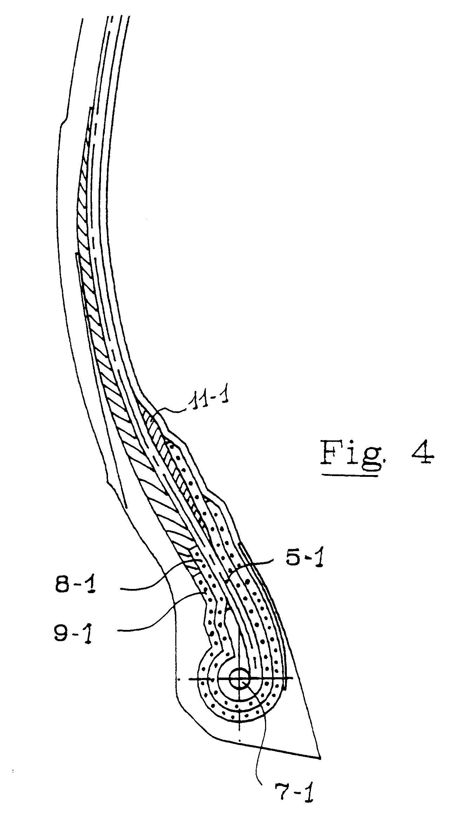

On peut aussi envisager des cas où la nappe carcasse est disposée entre des nappes de renfort, comme représenté à la figure 4, où la nappe carcasse 5-1 s'enroule directement autour de l'élément annulaire 7-1, deux nappes de renfort 8-1, et 9-1 s'enroulant autour de la nappe carcasse 5-1 et de l'élément 7-1. Dans ce cas, lors de la fabrication de l'enveloppe, on dispose alors sur le tambour de confection dans l'ordre les nappes 9-1, 8-1, la gomme de découplage 11-1, la nappe carcasse 5-1 et l'élément 7-1.

## Revendications

1. Enveloppe (1) de pneumatique radiale comportant un sommet (2), deux bourrelets (4) et au moins une nappe carcasse radiale (5) s'étendant d'un bourrelet (4) à l'autre, caractérisée en ce que chaque bourrelet (4) présente les points suivants :
a) il est dépourvu de tringle et il comporte un élément annulaire (7) dont la résistance à la rupture en traction dans le sens longitudinal est notablement inférieure à celle qui serait nécessaire pour une tringle dans une enveloppe connue de même dimension, l'axe de cet élément annulaire étant l'axe de révolution de l'enveloppe;
b) au moins deux nappes adjacentes (8, 9, 10A, 10B) dites "nappes de renfort" sont disposées au contact de l'élément annulaire (7), ou à proximité de cet élément annulaire ; ces nappes de renfort comportant chacune des fils de renfort (81, 91, 101) parallèles entré eux, ces fils étant croisés d'une nappe à l'autre ; dans chaque nappe de renfort l'angle α est l'angle aigu formé, en un point quelconque (P) d'un fil, par la direction de ce fil et la tangente (T) à un cercle (C) ayant pour axe l'axe de révolution de l'enveloppe et passant par ce point du fil, cet angle α vérifiant la relation 0 <α≤ 10°, la mesure étant effectuée dans une zone où les nappes de renfort sont pratiquement parallèles entre elles ;
c) l'ensemble (40A) des nappes de renfort a une résistance à la rupture en traction, mesurée dans le sens longitudinal, au moins égale à celle qui serait nécessaire pour une tringle dans une enveloppe connue de même dimension ;
d) la nappe carcasse s'enroule autour de l'élément annulaire ;
e) les nappes de renfort ont leurs extrémités supérieures (8a, 9a, 10a, 10b) disposées dans le bourrelet, ces extrémités étant disposées à des hauteurs différentes.

2. Enveloppe (1) de pneumatique selon la revendication 1, caractérisée en ce que l'élément annulaire (7) à une résistance à la rupture en traction, mesurée dans le sens longitudinal, inférieure à 500 daN.

3. Enveloppe (1) de pneumatique, selon la revendication 2, caractérisée en ce que l'élément annulaire (7) à une résistance à la rupture en traction, mesurée dans le sens longitudinal, inférieure à 300 daN.

4. Enveloppe (1) de pneumatique selon l'une quelconque des revendications 1 à 3, caractérisée en ce que la résistance à la rupture en traction, mesurée dans le sens longitudinal, de l'ensemble (40A) des nappes de renfort est supérieure à 800 daN.

5. Enveloppe (1) de pneumatique selon la revendication 4, caractérisée en ce que la résistance à la rupture en traction, mesurée dans le sens longitudinal de l'ensemble (40A) des nappes de renfort est supérieure à 1000 daN.

6. Enveloppe (1) de pneumatique selon l'une quelconque des revendications 1 à 5, caractérisée en ce que au moins une nappe de renfort (10, 8-1, 9-1) s'enroule autour de l'élément annulaire (7).

7. Enveloppe (1) de pneumatique selon l'une quelconque des revendications 1 à 6, caractérisée en ce que la nappe carcasse (5) s'enroule autour de l'ensemble des nappes de renfort.

8. Enveloppe (1) de pneumatique selon l'une quelconque des revendications 1 à 6, caractérisée en ce que la nappe carcasse (5) est disposée entre des nappes de renfort (8-1, 9-1).

9. Enveloppe (1) de pneumatique selon l'une quelconque des revendications 1 à 8, caractérisée en ce que au moins une nappe de renfort (8-1, 9-1) s'enroule autour de la nappe carcasse (5) et de l'élément annulaire (7).

10. Procédé pour fabriquer une enveloppe (1) de pneumatique dépourvue de tringle, caractérisé par les points suivants :
a) on dispose sur un tambour de confection;
- un élément annulaire (7) dont la résistance à la rupture en traction dans le sens longitudinal est notablement inférieure à celle qui serait nécessaire pour une tringle, dans une enveloppe connue de même dimension, l'axe de cet élément étant l'axe de rotation du tambour ;
- au moins deux nappes adjacentes (8, 9, 10A, 10B); dites "nappes de renfort", au contact de l'élément annulaire (7), ou à proximité de cet élément annulaire ; ces nappes de renfort comportant chacune des fils de renfort (81, 91, 101) parallèles entre eux, dans chaque nappe et croisés d'une nappe à l'autre;
- au moins une nappe carcasse comportant des fils de renfort disposés sensiblement selon les génératrices du cylindre de confection ;
b) on conforme l'enveloppe, de telle sorte que, après conformation, dans chaque nappe de renfort l'angle α vérifie la relation 0 < α ≤ 10°, α étant l'angle aigu formé, en un point (P) quelconque d'un fil de la nappe, par la direction de ce fil et la tangente (T) a un cercle (C) ayant pour axe l'axe de révolution de l'enveloppe et passant par ce point du fil, la mesure étant effectuée dans une zone où les nappes de renfort sont pratiquement parallèles entre elles ;
c) on cuit l'enveloppe.

## Claims

1. A radial tyre (1) comprising a crown (2), two beads (4) and at least one radial carcass ply (5) extending from one bead (4) to the other, characterised in that each bead (4) has the following features:
a) it has no bead wire, and it comprises an annular member (7) with a tensile strength in the longitudinal direction significantly lower than that which would be necessary for a bead wire in a known tyre of the same dimension, the axis of this annular member being the axis of revolution of the tyre;
b) at least two adjacent plies (8, 9, 10A, 10B) called "reinforcing plies" are placed in contact with the annular member (7), or close to said annular member; each of these reinforcing plies comprises reinforcement cords (81, 91, 101) which are parallel to one another, these cords being crossed from one ply to the other; in each reinforcing ply the angle α is the acute angle formed at any point (P) along a cord, by the direction of this cord and the tangent (T) to a circle (C) having as an axis the axis of revolution of the tyre and passing through that point of the cord, this angle α conforming to the relation 0 < α ≤ 10°, the measurement being effected in an area where the reinforcing plies are practically parallel to one another;
c) the assembly (40A) of reinforcing plies has a tensile strength, measured in the longitudinal direction, at least equal to that which would be necessary for a bead wire in a known tyre of the same dimension;
d) the carcass ply winds around the annular member;
e) the upper ends (8a, 9a, 10a, 10b) of the reinforcing plies are arranged in the bead, these ends being arranged at different heights.

2. A tyre (1) according to claim 1, characterised in that the annular member (7) has a tensile strength, measured in the longitudinal direction, of less than 500 daN.

3. A tyre (1) according to claim 2, characterised in that the annular member (7) has a tensile strength, measured in the longitudinal direction, of less than 300 daN.

4. A tyre (1) according to any one of claims 1 to 3, characterised in that the tensile strength, measured in the longitudinal direction, of the assembly (40A) of reinforcing plies is greater than 800 daN.

5. A tyre (1) according to claim 4, characterised in that the tensile strength, measured in the longitudinal direction of the assembly (40A) of the reinforcing plies is greater than 1000 daN.

6. A tyre (1) according to any one of claims 1 to 5, characterised in that at least one reinforcing ply (10, 8-1, 9-1) winds about the annular member (7).

7. A tyre (1) according to any one of claims 1 to 6, characterised in that the carcass ply (5) winds around the assembly of reinforcing plies.

8. A tyre (1) according to any one of claims 1 to 6, characterised in that the carcass reinforcement (5) is arranged between reinforcing plies (8-1, 9-1).

9. A tyre (1) according to any one of claims 1 to 8, characterised in that at least one reinforcing ply (8-1, 9-1) winds around the carcass ply (5) and the annular member (7).

10. A process for producing a tyre (1) without a bead wire, characterised by the following features:
a) there are placed on a building drum:
- one annular member (7) with a tensile strength in the longitudinal direction which is significantly lower than that which would be necessary for a bead wire in a known tyre of the same dimension, the axis of this member being the axis of rotation of the drum;
- at least two adjacent plies (8, 9, 10A, 10B), called "reinforcing plies", in contact with the annular member (7), or close to this annular member; each of these reinforcing plies contains reinforcement cords (81, 91, 101) which are parallel to one another in each ply and crossed from one ply to the other;
- at least one carcass ply comprising reinforcement cords placed practically along the generatrices of the building drum;
b) the tyre is shaped in such a way that, after shaping, in each reinforcing ply the angle α conforms to the relation 0 < α ≤ 10°, α being the acute angle formed, at any point (P) along a cord of the ply, by the direction of this cord and the tangent (T) to a circle (C) having as an axis the axis of revolution of the tyre and passing through this point of the cord, the measurement being effected in a zone where the reinforcing plies are practically parallel to one another;
c) the tyre is cured.

## Patentansprüche

1. Radial-Reifenmantel (1) mit einem Scheitel (2), zwei Wülsten (4) und mindestens einer radialen Karkasseneinlage (5), die sich vom einen Wulst (4) zum anderen erstreckt, **dadurch gekennzeichnet,** daß jeder Wulst (4) die folgenden Punkte aufweist:
(a) er hat keinen Wulstkern und weist ein ringförmiges Element (7) auf, dessen Reißwiderstand bei Zug in Längsrichtung bedeutend kleiner ist als der, der für einen Wulstkern in einem bekannten Mantel mit gleicher Abmessung notwendig wäre, wobei die Achse dieses ringförmigen Elements die Drehachse des Mantels ist;
(b) mindestens zwei nebeneinanderliegende Einlagen (8, 9 10A, 10B), die "Verstärkungseinlagen" genannt sind, sind in Berührung mit dem ringförmigen Element (7) angeordnet, oder in der Nähe dieses ringförmigen Elements; diese Verstärkungseinlagen weisen jede Verstärkungsdrähte (81, 91, 101) auf, die zueinander parallel sind, wobei diese Drähte von der einen Einlage zur anderen überkreuzt sind; in jeder Verstärkungseinlage ist der Winkel α der spitze Winkel, der an irgendeinem Punkt (P) eines Drahtes durch die Richtung dieses Drahtes und die Tangente (T) an einen Kreis (C) gebildet ist, der zur Achse die Drehachse des Mantels hat und durch diesen Punkt des Drahtes hindurchläuft, wobei dieser Winkel α der Bedingung genügt 0 < α ≤ 10°, und wobei die Messung in einer Zone bewirkt wird, wo die Verstärkungseinlagen praktisch zueinander parallel sind;
(c) die Baugruppe (40A) aus Verstärkungseinlagen hat einen Reißwiderstand auf Zug, gemessen in Längsrichtung, der mindestens gleich ist dem, der für einem Wulstkern in einem bekannten Mantel mit derselben Abmessung notwendig wäre;
(d) die Karkasseneinlage ist rund um das ringförmige Element herumgeschlagen; und
(e) die Verstärkungseinlagen sind mit ihren oberen Enden (8a, 9a, 10a, 10b) im Wulst angeordnet, wobei diese Enden in unterschiedlichen Höhen angeordnet sind.

2. Reifenmantel (1) nach Anspruch 1, dadurch gekennzeichnet, daß das ringförmige Element (7) einen Widerstand gegenüber Reißen bei Zug aufweist, gemessen in Längsrichtung, der kleiner ist als 500 daN.

3. Reifenmantel (1) nach Anspruch 2, dadurch gekennzeichnet, daß das ringförmige Element (7) einen Reißwiderstand bei Zug, gemessen in Längsrichtung, aufweist, der kleiner ist als 300 daN.

4. Reifenmantel (1) nach irgendeinem der Ansprüche 1 bis 3, dadurch gekennzeichnet, daß der Reißwiderstand bei Zug, gemessen in Längsrichtung, der Anordnung (40A) von Verstärkungseinlagen größer ist als 800 daN.

5. Reifenmantel (1) nach Anspruch 4, dadurch gekennzeichnet, daß der Reißwiderstand bei Zug, gemessen in Längsrichtung der Anordnung (40A) von Verstärkungseinlagen, größer ist als 1000 daN.

6. Luftreifenmantel (1) nach irgendeinem der Ansprüche 1 bis 5, dadurch gekennzeichnet, daß mindestens eine Verstärkungseinlage (10, 8-1, 9-1) um das ringförmige Element (7) herumgeschlagen ist.

7. Reifenmantel (1) nach irgendeinem der Ansprüche 1 bis 6, dadurch gekennzeichnet, daß die Karkasseneinlage (5) rund um die Anordnung von Verstärkungseinlagen herumgeschlagen ist.

8. Luftreifenmantel (1) nach irgendeinem der Ansprüche 1 bis 6, dadurch gekennzeichnet` daß die Karkasseneinlage (5) zwischen den Verstärkungseinlagen (8-1, 9-1) angeordnet ist.

9. Reifenmantel (1) nach irgendeinem der Ansprüche 1 bis 8, dadurch gekennzeichnet` daß mindestens eine Verstärkungseinlage (8-1, 9-1) rund um die Karkasseneinlage (5) und das ringförmige Element (7) herumgeschlagen ist.

10. Verfahren zum Herstellen eines Reifenmantels (1) ohne Wulstkern, gekennzeichnet durch die folgenden Punkte:
a) man ordnet auf einer Aufbautrommel die folgenden Teile an:
- ein ringförmiges Element (7), dessen Reißwiderstand bei Zug in Längsrichtung beträchtlich kleiner ist als der, der notwendig wäre für einen Wulstkern in einem bekannten Mantel mit gleicher Abmessung, wobei die Achse dieses Elements die Drehachse der Aufbautrommel ist;
- mindestens zwei benachbarte Einlagen (8, 9, 10A, 10B), die "Verstärkungseinlagen" genannt sind, in Berührung mit dem ringförmigen Element (7) oder in der Nähe dieses ringförmigen Elements; diese Verstärkungseinlagen weisen jeweils Verstärkungsdrähte (81, 91, 101) auf, die in jeder Einlage parallel zueinander sind und von der einen Einlage zur anderen gekreuzt sind;
- mindestens eine Karkasseneinlage, die Verstärkungsdrähte aufweist, die im wesentlichen längs der Erzeugenden des Aufbauzylinders angeordnet sind;
b) man formt den Mantel derart, daß nach der Formung in jeder Verstärkungseinlage der Winkel α der Zuordnung 0 < α ≤ 10° genügt, wobei α der spitze Winkel ist, der an irgendeinem Punkt (P) eines Einlagendrahtes durch die Richtung dieses Drahtes und die Tangente (T) an einen Kreis (C) gebildet ist, der die Drehachse des Mantels zur Achse hat und durch diesen Punkt des Drahtes hindurchläuft, wobei die Messung in einer Zone bewirkt wird, wo die Verstärkungseinlagen zueinander praktisch parallel sind;
c) man vulkanisiert diesen Mantel.
